# EUROPÄISCHE PATENTSCHRIFT

(11) **EP 4 573 535 B1**
(45) Veröffentlichungstag und Bekanntmachung des Hinweises auf die Patenterteilung: **11.03.2026**
(21) Anmeldenummer: 23751879.0
(22) Anmeldetag: 31.07.2023
(51) Int. Cl.: G08G 1/00, G01C 21/20, G01C 21/00, G08B 25/01

(54) **VERFAHREN ZUM ABSETZEN EINES NOTRUFS**
METHOD FOR PLACING AN EMERGENCY CALL
PROCÉDÉ DE PASSAGE D'UN APPEL D'URGENCE

(30) Priorität: 17.08.2022 DE 102022120808
(43) Veröffentlichungstag der Anmeldung: 25.06.2025
(73) Patentinhaber: AUDI AG, 85057 Ingolstadt (DE)
(72) Erfinder: HEHN, Thorsten, 85055 Ingolstadt (DE)
(74) Vertreter: RDL Patentanwälte PartG mbB
(86) Internationale Anmeldenummer: PCT/EP2023/071193
(87) Internationale Veröffentlichungsnummer: WO 2024/037864

(56) Entgegenhaltungen:
- EP-A2- 1 840 519
- DE-A1- 102016 204 823
- US-B1- 6 181 995

## Beschreibung

Die Erfindung betrifft ein Verfahren zum Absetzen eines Notrufs und ein System zum Absetzen eines Notrufs.

Die Druckschrift DE 10 2016 204 823 A1 beschreibt eine GPS-basierte Gebietserkennung in einem Fahrzeug.

Ein Verfahren zur Erfassung einer Eigenposition bezüglich eines Grenzverlaufs ist in der Druckschrift DE 10 2020 211 392 A1 beschrieben.

Die Druckschrift US 2016/217151 A1 zeigt eine Technik zum Darstellen geographischer Daten mit einem Polygonzug.

Als Stand der Technik sind die "Verordnung (EU) 2015/758 des Europäischen Parlaments und des Rates", Amtsblatt der Europäischen Union (DE), L 123, S. 77- 89, 2015 und der Artikel von J. Snoeyink: "Point Location" preliminary version (August 10, 2017) aus "The Handbook of Discrete and Computational Geometry", J. E. Goodmann, J. O'Rourke, and C. D. Töth (editors), 3rd edition, CRC Press, Boca Raton, FL, 2017 bekannt.

Außerdem sind Kursunterlagen zu CS166, Vorlesung 11 zur Planar Point Location, 2021, von K. Schwarz et al. und die Slides zu CS164 und CS266, Computational Geometry. Week 6: Point location. Reading: Section 6.1, 2020, von M. Goodrich bekannt.

Die Druckschrift EP 1 840 519 A2 beschreibt ein Routensuchverfahren und eine Navigationsvorrichtung.

Ein Verfahren zum Bestimmen einer Fahrleistung eines Fahrzeugs ist aus der Druckschrift US 6 181 995 B1 bekannt.

Vor diesem Hintergrund war es eine Aufgabe, einen Notruf positionsabhängig abzusetzen.

Diese Aufgabe wird durch ein Verfahren und ein System mit den Merkmalen der unabhängigen Patentansprüche gelöst. Ausführungsformen des Verfahrens und des Systems gehen aus den abhängigen Patentansprüchen und der Beschreibung hervor.

Das erfindungsgemäße Verfahren ist zum Absetzen eines Notrufs von einem Fahrzeug, bspw. von einem Kraftfahrzeug, vorgesehen. Dabei wird zunächst ermittelt und/oder bestimmt, in welchem geographischen Gebiet sich das Fahrzeug aktuell befindet bzw. aufhält. Dabei wird ausgehend von einer aktuellen Position des Fahrzeugs in dem zu bestimmenden Gebiet eine erste Spur und eine zweite Spur gelegt, bei denen es sich um gerade Linien handelt, die sich, bezüglich ihrer Richtung, ausgehend von der aktuellen Position voneinander unterscheiden und zufällig gewählt werden. Dabei wird unter Verwendung von bereitgestellten und/oder ermittelten Geodaten von jeweils zwei unmittelbar benachbarten Gebieten zugeordneten Grenzen, die zwischen diesen benachbarten Gebieten liegen, überprüft, welche Grenze von der ersten Spur ausgehend von der aktuellen Position des Fahrzeugs als erstes und welche Grenze von der zweiten Spur ausgehend von der aktuellen Position des Fahrzeugs als erstes geschnitten wird. Dabei wird für den Fall, dass beide Spuren jeweils die gleiche Grenze, die zwischen denselben Gebieten verläuft, schneiden, ausgehend von einer aktuellen Position des Fahrzeugs eine neue erste Spur und eine neue zweite Spur gelegt. Außerdem wird für den üblicherweise alternativen Fall, bei dem sich die von den beiden Spuren ausgehend von der aktuellen Position des Fahrzeugs jeweils als erstes geschnittenen Grenzen voneinander unterscheiden, jenes Gebiet als das Gebiet, in dem sich das Fahrzeug aktuell befindet, bestimmt, dem beide Grenzen, bspw. Gebietsgrenzen, zugeordnet sind, wobei der Notruf abhängig von dem bestimmten geographischen Gebiet von dem Fahrzeug, bspw. von einem Kommunikationsmodul dieses Fahrzeugs, automatisch abgesetzt wird.

In Ausgestaltung werden für den Fall, dass zwei erstmalig gelegte Spuren jeweils dieselbe Grenze, d. h. jeweils die Grenze zwischen denselben unmittelbar benachbarten Gebieten, schneiden, diese erstmalig gelegten Spuren verworfen. Weiterhin wird ausgehend von der jeweils aktuellen Position des Fahrzeugs so oft eine neue erste Spur und eine neue zweite Spur gelegt, bis beide Spuren jeweils die Grenze zwischen zwei unterschiedlichen unmittelbar benachbarten Gebieten schneiden. Falls das Fahrzeug steht und sich zumindest vorübergehend an ein und derselben Position befindet, werden die zunächst zu legenden Spuren und die erforderlichenfalls neu zu legenden Spuren jeweils ausgehend von derselben Position gelegt. Falls das Fahrzeug fährt und sich bewegt, ändert es seine Position. Dabei werden die zunächst zu legenden Spuren ausgehend von einer ersten Position des Fahrzeugs und die erforderlichenfalls neu zu legenden Spuren ausgehend von einer zweiten Position des Fahrzeugs gelegt.

In der Regel befindet sich eine jeweilige Grenze zwischen jeweils zwei unmittelbar aneinander grenzenden Gebieten, die in Ausgestaltung ein Paar unmittelbar benachbarter Gebiete, die durch diese gemeinsame Grenze, die den Gebieten zugeordnet ist, getrennt sind, bilden. Dabei schneidet die erste geradlinige Spur eine erste Grenze zwischen einem ersten Paar Gebiete und die zweite geradlinige Spur eine zweite Grenze zwischen einem zweiten Paar Gebiete. Falls beide Paare dieselben zwei Gebiete aufweisen, sind gemäß einem ersten Fall ausgehend von der jeweils aktuellen Position neue Spuren zu legen. Falls die erste Grenze zwischen einem ersten Paar Gebieten und die zweite Grenze zwischen einem zweiten Paar Gebieten liegt, wird in einem zweiten Fall auf Grundlage dessen jenes Gebiet bestimmt, in dem sich das Fahrzeug befindet bzw. aufhält. Dabei weist das erste Paar Gebiete ein erstes Gebiet und ein zweites Gebiet und das zweite Paar auch das erste Gebiet und ein weiteres drittes Gebiet auf, wobei beide Paare insgesamt drei unterschiedliche Gebiete aufweisen, wobei jenes Gebiet, in dem das Fahrzeug ist, beiden Paaren an Gebieten angehört. Gebiete, die hierbei berücksichtigt werden, umfassen das zu bestimmende bzw. bestimmte Gebiet, in dem das Fahrzeug ist, und zwei unterschiedliche, daran unmittelbar angrenzende benachbarte Gebiete.

Die erste und zweite Spur werden ausgehend von der Position in unterschiedliche Richtungen gelegt, wobei ein Winkel zwischen den beiden Spuren größer 0° und kleiner 360° ist, wobei ein möglicher Winkel zwischen den Spuren bspw. 90° oder 180° beträgt, wobei die beiden Spuren im letzteren Fall entgegengesetzt ausgerichtet und/oder orientiert sind.

Als Gebiet wird ein Land, ein Staat, ein Bundesland, ein üblicherweise völkerrechtlich anerkanntes Territorium und/oder ein Gewässer, bspw. ein Meer, ein Ozean, ein See und/oder ein Fluss, vorgesehen und/oder berücksichtigt. Somit ist es möglich, dass ein Gebiet eines Paares ein Land bzw. Festland und ein zweites Gebiet ein Gewässer ist, die unmittelbar aneinander grenzen, wobei eine Grenze zwischen einem Land und einem Gewässer auch als Gewässergrenze, bspw. Meeresgrenze, bezeichnet werden kann.

Das erfindungsgemäße System ist zum Absetzen eines Notrufs von einem Fahrzeug ausgebildet, wobei das System eine Recheneinheit und ein Kommunikationsmodul, die in der Regel zugleich auch Komponenten des Fahrzeugs sind, aufweist. Dabei ist die Recheneinheit dazu ausgebildet, zunächst zu ermitteln und/oder zu bestimmen, in welchem Gebiet sich das Fahrzeug aktuell befindet, wobei die Recheneinheit zum Ermitteln des zu bestimmenden Gebiets dazu ausgebildet ist, ausgehend von einer aktuellen Position des Fahrzeugs in dem zu bestimmenden Gebiet eine erste Spur und eine zweite Spur zu legen, wobei sich die Spuren voneinander unterscheiden und unter Verwendung von bereitgestellten und/oder ermittelten Geodaten von jeweils zwei unmittelbar benachbarten Gebieten zugeordneten Grenzen, die zwischen diesen benachbarten Gebieten liegen, zu überprüfen, welche Grenze von der ersten Spur ausgehend von der aktuellen Position als erstes und welche Grenze von der zweiten Spur ausgehend von der aktuellen Position als erstes geschnitten wird. Die Recheneinheit ist dazu ausgebildet, für den Fall, dass beide Spuren die gleiche Grenze schneiden, ausgehend von der jeweils aktuellen Position eine neue erste Spur und eine neue zweite Spur zu legen. Die Recheneinheit ist dazu ausgebildet, für den Fall, dass sich die von den beiden Spuren ausgehend von der Position jeweils als erstes geschnittenen Grenzen voneinander unterscheiden, jenes Gebiet als das Gebiet, in dem sich das Fahrzeug aktuell befindet, zu bestimmen, dem beide Grenzen zugeordnet sind. Das Kommunikationsmodul ist dazu ausgebildet, den Notruf abhängig von dem bestimmten Gebiet von dem Fahrzeug automatisch an eine Notrufzentrale in diesem bestimmten Gebiet abzusetzen und an diese Notrufzentrale zu senden.

Es ist möglich, dass eine Ausführungsform des vorgestellten Verfahrens mit einer Ausführungsform des vorgestellten Systems durchgeführt wird. Mit dem Verfahren wird ein effizienter Algorithmus zur Bestimmung jenes Lands, in dem das Fahrzeug aktuell ist, bereitgestellt, wobei unter Berücksichtigung dessen der Notruf bzw. eCall (emergency call) ausgelöst wird, wobei es möglich ist, den Notruf an ein für das jeweilige Land spezifische Rufnummer zu senden und/oder für den Notruf eine Sprache des jeweiligen Lands zu berücksichtigen.

In Ausgestaltung ist die Recheneinheit dazu ausgebildet, die Grenzen und/oder Spuren auf ein Koordinatensystem, in das die Gebiete eingetragen sind, zu projizieren.

Das System weist in Ausgestaltung ein Geodatenmodul auf, das dazu ausgebildet ist, die Geodaten der Recheneinheit direkt oder über das Kommunikationsmodul indirekt bereitzustellen. Dabei ist das Geodatenmodul, bspw. als Teil eines Navigationssystems, in dem Fahrzeug angeordnet oder als Teils eines fahrzeugexternen und/oder ortsfesten Servers ausgebildet.

In Ausgestaltung werden von der aktuellen Position zwei zufällig gewählte, aber unterschiedlich gerichtete Spuren mit einem dazwischen befindlichen Winkel größer 0° und kleiner 360° gelegt. Für beide Spuren wird verfolgt, wann diese zum ersten Mal auf eine Grenze, bspw. Ländergrenze, treffen. Dabei befindet sich eine erste Grenze, die von der ersten Spur geschnitten wird, zwischen einem Gebiet, bspw. Land, A und einem Gebiet, bspw. Land, B. Entsprechend befindet sich eine zweite Grenze, die von der zweiten Spur geschnitten wird, zwischen einem Gebiet, bspw. Land, C und einem Gebiet, bspw. Land, D. Sind diese beiden Grenzen bekannt, wird geprüft, ob zwei der vier genannten Gebiete entlang einer jeweiligen Spur in Richtung der aktuellen Position auf das gleiche Gebiet zeigen, wobei dieses Gebiet ein Aufenthaltsland ist, in dem sich das Fahrzeug befindet. Dies ist alternativ oder ergänzend auch möglich, wenn unter den vier Gebieten drei unterschiedlich sind, wobei sich das Fahrzeug in jenem Gebiet befindet, das unter diesen vier Gebieten doppelt vorhanden ist. Anderenfalls, wenn bspw. nur zwei der vier Gebiete oder alle vier Gebiete unterschiedlich sind, wird der Algorithmus mit zwei neuen Spuren wiederholt, die neu gewählt werden und ebenfalls zufällige Richtungen aufweisen.

Bei dem vorgesehenen Algorithmus ist vorgesehen, ausgehend von der gegebenen Position zwei nächstgelegene, unterschiedliche Ländergrenzen zu finden, die ein Land gemeinsam haben. Bei einem ersten Beispiel ist entlang der ersten Spur Land A Frankreich und Land B Deutschland. Entlang der zweiten Spur ist Land C Deutschland und Land D Tschechien. Somit wird entschieden, dass das Aufenthaltsland des Fahrzeugs Deutschland ist. In einem zweiten Beispiel ist entlang der ersten Spur Land A Frankreich und Land B Deutschland und entlang der zweiten Spur Land C Frankreich und Land D Deutschland. In diesem Fall ist der Algorithmus mit zwei neuen, zufällig ausgerichteten Spuren zu wiederholen. In einem dritten Beispiel ist Land A Frankreich und Land B Deutschland. Außerdem ist entlang der zweiten Spur Land C Frankreich und Land D die Schweiz, wobei entschieden wird, dass das Aufenthaltsland des Fahrzeugs Frankreich ist. Das Verfahren kann in Ausgestaltung auch für ein Land durchgeführt werden, das nur ein Nachbarland aufweist und ansonsten an ein Meer grenzt. In diesem Fall wird im Rahmen des Verfahrens das Nachbarland als erstes Gebiet und das Meer als zweites Gebiet berücksichtigt. Dies ist bspw. für Portugal möglich, das einerseits an Spanien und andererseits an den Atlantik grenzt.

Als Grundlage dienen die Geodaten der Ländergrenzen und ihre Projektion in und/oder auf das verwendete Koordinatensystem. Dieses Koordinatensystem ist im Fahrzeug, bspw. in der Recheneinheit, durch einen GNSS-Empfänger, bspw. im Kommunikationsmodul, vorgegeben. Im Gegensatz zu herkömmlichen Kartendaten für die Navigation, deren Speichergröße meist im Bereich von 10 bis 20 GB liegt, sind die Gebietsgrenzen, bspw. Ländergrenzen, der Welt durch eine Dateigröße unter 100 kB abbildbar. Sind die Ländergrenzen bekannt, muss nun algorithmisch bestimmt werden, zu welchem Land die aktuelle Position korrespondiert. Dabei kann insbesondere auf eine Verwendung von Kacheln verzichtet werden, da diese Ungenauigkeiten und Einbußen bei einer Speichereffizienz mit sich bringen. Das hier vorgeschlagene Verfahren ist im Fahrzeug effizient umsetzbar. Dies bedeutet, dass es speichereffizient ist und nur einen geringen Vorrat an permanentem Speicher und Arbeitsspeicher benötigt und/oder belegt. Außerdem ist es bezüglich der Rechenleistung effizient. Das Verfahren ist u. a. für ein Grenzgebiet geeignet, wobei die Position in der Nähe einer Grenze zwischen zwei benachbarten Ländern ist.

Mit dem Notruf bzw. einer entsprechenden Funktion hierfür wird bei einem Notfall des Fahrzeugs zu der Notrufzentrale und/oder einer Rettungsleitstelle eine digitale Daten- und Sprachverbindung aufgebaut. Der Notruf und/oder die Funktion kann bzw. können auf zwei Arten getriggert werden, nämlich manuell durch einen Nutzer, bspw. Fahrer, des Fahrzeugs, bspw. bei einem medizinischen Notfall, sowie automatisch durch das Fahrzeug, bspw. dessen Recheneinheit, wobei der Leitstelle ein Unfall mitgeteilt wird. In beiden Fällen werden der Rettungsleitstelle wichtige Informationen wie die Position des Fahrzeugs, eine Anzahl der Insassen und Antriebsart des Fahrzeugs, das als Verbrennungs-, Hybrid- oder Elektrofahrzeug ausgebildet sein kann, übermittelt. Zur automatischen Auslösung der Funktion für den Notruf detektiert bspw. ein Airbag-Steuergerät den Unfall, eine Nachricht über dieses Ereignis sowie ggf. weitere Nachrichten werden an eine Connectivity Unit übertragen, auf welcher eine Funktion zum Absetzen des Notrufs läuft. Bei der Funktion für den Notruf sind zwei Ausgestaltungen vorgesehen. Bei einem privaten Notruf wird ein von einem Fahrzeughersteller eigens dafür betriebenes Callcenter angerufen. Alternativ wird die Rettungsleitstelle direkt angerufen. Unabhängig von einer jeweils vorgesehenen Ausgestaltung kann vor Absetzen eines jeweiligen Notrufs das aktuelle Aufenthaltsland des Fahrzeugs berücksichtigt und der Notruf abhängig davon automatisch abgesetzt werden.

Mit dem Verfahren ist die Bestimmung des Lands, in dem sich ein Fahrzeug aktuell aufhält, möglich. Über das Geomodul können der Recheneinheit eine GNSS-Position zum Ermitteln der aktuellen Position des Fahrzeugs und geographische Kartendaten über die Gebiete und die dazwischen verlaufenden Grenzen bereitgestellt werden, wobei die GNSS-Position mit den Kartendaten abgeglichen werden kann. Außerdem kann mit dem Kommunikationsmodul eine Kennung eines Mobilfunkproviders des mit dem Verfahren bestimmten Lands abgefragt werden. Diese Kennung umfasst einen mobilen Ländercode (Mobile Country Code, MCC) und einen mobilen Netzwerkcode (Mobile Network Code, MNC), wobei diese Kennung zum Absetzen des Notrufs verwendet wird. Es besteht die Möglichkeit, dass ein Mobilfunkmodem des Kommunikationsmoduls berichtet, dass der aktuelle Mobilfunkprovider bspw. die Kennung 262-03 für "o2-de" trägt. Dabei zeigt der Ländercode MCC 262 an, dass sich das Fahrzeug in Deutschland oder in einem Grenzgebiet eines der Nachbarländer bzw. Nachbarstaaten Deutschlands befindet. Es ist möglich, dass das Verfahren auch für ein Fahrzeug ohne Navigationssystem durchgeführt wird und folglich über keine Kartendaten verfügt. Üblicherweise kann gemäß bislang bekannter Maßnahmen eine Abfrage des mobilen Ländercodes (Mobile Country Code, MCC) und des mobilen Netzwerkcodes (Mobile Network Code, MNC) über das Mobilfunkmodem nur dann erfolgen, wenn das Mobilfunkmodem ein Mobilfunknetz aktiv beobachtet, so dass das Mobilfunkmodem entsprechend zu aktivieren ist. Allerdings ist ein Mobilfunkmodem zu einer Realisierung des Verfahrens üblicherweise nicht erforderlich. Außerdem ist zu berücksichtigen, dass eine Gesetzgebung beim Absetzen des Notrufs (eCall) fordert, dass sich das Mobilfunkmodem zur Entlastung des Mobilfunknetzes zurückzieht, wenn keine weiteren Dienste neben dem Notruf aktiv sind und sich das Mobilfunkmodem in einem Ruhezustand (Dormant Mode) befindet.

Die Erfindung ist anhand von Ausführungsformen in der Zeichnung schematisch dargestellt und wird unter Bezugnahme auf die Zeichnung schematisch und ausführlich beschrieben.
Figuren 1a, 1b zeigen in schematischer Darstellung eine Ausführungsform des erfindungsgemäßen Verfahrens.
Figur 2 zeigt in schematischer Darstellung ein Fahrzeug und eine Ausführungsform des erfindungsgemäßen Systems, mit dem die Ausführungsform des erfindungsgemäßen Verfahrens durchgeführt wird.

Die Figuren werden zusammenhängend und übergreifend beschrieben. Gleichen Bezugszeichen sind dieselben Komponenten zugeordnet.

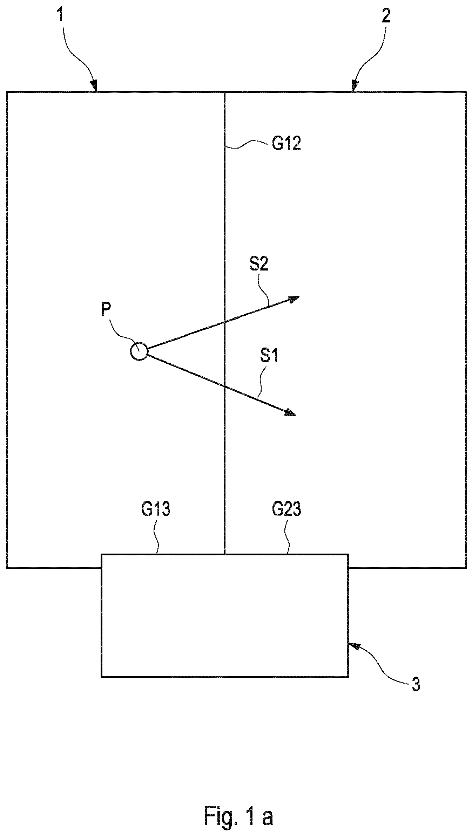

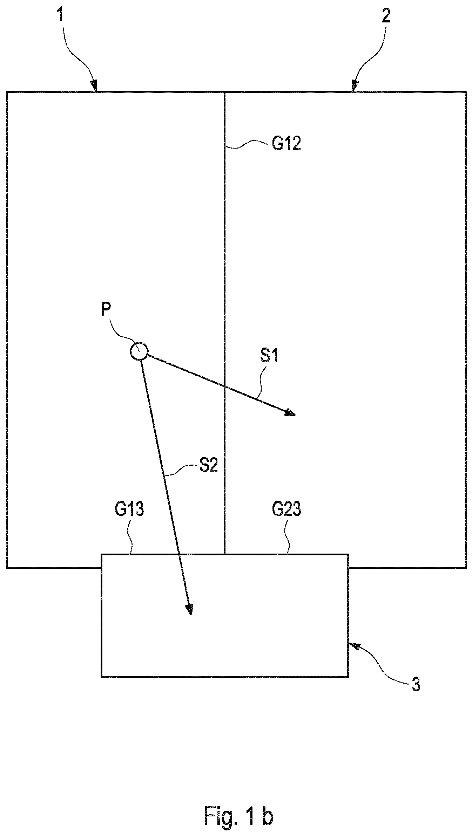

Die Figuren 1a und 1b zeigen als geographische Gebiete ein erstes Land 1, ein zweites Land 2 und ein drittes Land 3, wobei zwischen dem ersten und zweiten Land 1, 2 eine erste Grenze G12, zwischen dem ersten und dritten Land 1, 3 eine zweite Grenze G13 und zwischen dem zweiten und dritten Land 2, 3 eine dritte Grenze G23 liegt.

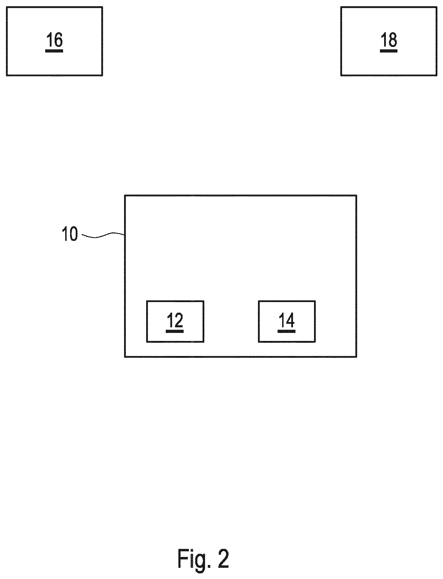

Die Ausführungsform des erfindungsgemäßen Verfahrens wird für das Fahrzeug 10 aus Figur 2 durchgeführt, das eine Recheneinheit 12 und ein Kommunikationsmodul 14 aufweist, die auch als Komponenten der Ausführungsform des erfindungsgemäßen Systems ausgebildet sind, das als weitere Komponenten ein hier ortsfestes, bspw. servergestütztes, Geodatenmodul 16 und eine Notrufzentrale 18 bzw. Rettungsleitstelle aufweist.

Es ist vorgesehen, dass sich das Fahrzeug 10 an einer in Figur 1a und 1b jeweils gezeigten Position P befindet, wobei jedoch zunächst unbekannt sei, in welchem Land 1, 2, 3 als möglichem Gebiet die Position P ist. Bei der hier vorgestellten Ausführungsform des Verfahrens wird dieses Gebiet und somit dieses Land 1, 2, 3 bestimmt. Dabei wird ausgehend von der aktuellen Position P des Fahrzeugs 10 in dem zu bestimmenden Gebiet eine erste Spur S1 und eine zweite Spur S2 gelegt, die hier als gerade Linien ausgebildet sind und sich hinsichtlich ihrer Richtung voneinander unterscheiden. Weiterhin wird unter Verwendung von Geodaten, die dem Kommunikationsmodul 14 und somit der Recheneinheit 12 von dem Geodatenmodul 16 bereitgestellt werden, von jeweils zwei unmittelbar benachbarten Ländern 1, 2, 3 und diesen zugeordneten Grenzen G12, G13, G23, die zwischen diesen Ländern 1, 2, 3 liegen, überprüft, welche Grenze G12, G13, G23 von der ersten Spur S1 ausgehend von der aktuellen Position P als erstes und welche Grenze G12, G13, G23 von der zweiten Spur S2 ausgehend von der aktuellen Position P des Fahrzeugs 10 als erstes geschnitten wird.

Dabei ist ein erster Fall und/oder Versuch zum Bestimmen des Lands 1, 2, 3 anhand von Figur 1a dargelegt, die zeigt, dass sich beide Spuren S1, S2 ausgehend von dem ersten Land 1 zu dem zweiten Land 2 erstrecken und jeweils dieselbe bzw. gleiche erste Grenze G12 zwischen diesen beiden Ländern 1, 2 schneiden.

Da ein Ergebnis dieses ersten Versuchs in Ausgestaltung des Verfahrens nicht aussagekräftig ist, wird in einem zweiten Fall und/oder Versuch ausgehend von der aktuellen Position P eine neue erste Spur S1 und eine neue zweite Spur S2 gelegt, was anhand von Figur 1b gezeigt ist.

Dabei erstreckt sich die erste neue Spur S1 ausgehend von dem ersten Land 1 zu dem zweiten Land 2 und schneidet dabei die erste Grenze G12. Im Unterschied hierzu erstreckt sich die zweite neue Spur S2 ausgehend von dem ersten Land 1 zu dem dritten Land 3 und schneidet dabei die zweite Grenze G13, wobei sich die beiden Grenzen G12, G13 voneinander unterscheiden.

Dabei wird das erste Land 1 als jenes bestimmt, in dem sich das Fahrzeug 10 aktuell befindet und dem beide unterschiedlichen Grenzen G12, G13 zugeordnet sind. Dabei wird der Notruf abhängig von diesem bestimmten Land 1 von dem Kommunikationsmodul 14 des Fahrzeugs 10 automatisch abgesetzt und an die Notrufzentrale 18, die in diesem bestimmten ersten Land 1 liegt, gesendet.

### BEZUGSZEICHEN:

- 1,2,3: Land
- G12, G13, G23: Grenze
- P: Position
- S1, S2: Spur
- 10: Fahrzeug
- 12: Recheneinheit
- 14: Kommunikationsmodul
- 16: Geodatenmodul
- 18: Notrufzentrale

## Patentansprüche

1. Verfahren zum Absetzen eines Notrufs von einem Fahrzeug (10), bei dem bestimmt wird, in welchem Gebiet sich das Fahrzeug (10) aktuell befindet, wobei ausgehend von einer aktuellen Position (P) des Fahrzeugs (10) in dem zu bestimmenden Gebiet eine erste Spur (S1) und eine zweite Spur (S2) gelegt werden, die sich voneinander unterscheiden, wobei unter Verwendung von bereitgestellten Geodaten von jeweils zwei unmittelbar benachbarten Gebieten zugeordneten Grenzen (G12, G13, G23), die zwischen diesen Gebieten liegen, überprüft wird, welche Grenze (G12, G13, G23) von der ersten Spur (S1) ausgehend von der aktuellen Position (P) als erste und welche Grenze (G12, G13, G23) von der zweiten Spur (S2) ausgehend von der aktuellen Position (P) des Fahrzeugs (10) als erste geschnitten wird, wobei für den Fall, dass beide Spuren (S1, S2) die gleiche Grenze (G12, G13, G23) schneiden, ausgehend von einer aktuellen Position (P) des Fahrzeugs (10) eine neue erste Spur (S1) und eine neue zweite Spur (S2) gelegt wird, wobei für den Fall, dass sich die von den beiden Spuren (S1, S2) ausgehend von der aktuellen Position (P) jeweils als erstes geschnittenen Grenzen (G12, G13, G23) voneinander unterscheiden, jenes Gebiet als das Gebiet, in dem sich das Fahrzeug (10) aktuell befindet, bestimmt wird, dem beide Grenzen (G12, G13, G23) zugeordnet sind, wobei der Notruf abhängig von dem bestimmten Gebiet abgesetzt wird, wobei als Gebiet ein Land, ein Staat, ein Bundesland, ein völkerrechtlich anerkanntes Territorium und/oder ein Gewässer vorgesehen und/oder berücksichtigt wird.

2. Verfahren nach Anspruch 1, bei dem für den Fall, dass zwei erstmalig gelegte Spuren (S1, S2) jeweils dieselbe Grenze (G12, G13, G23) zwischen denselben unmittelbar benachbarten Gebieten schneiden, diese erstmalig gelegten Spuren (S1, S2) verworfen werden, wobei ausgehend von der Position (P) so oft eine neue erste Spur (S1) und eine neue zweite Spur (S2) gelegt wird, bis sich die von den beiden Spuren (S1, S2) jeweils geschnittenen Grenzen (G12, G13, G23) unterscheiden.

3. Verfahren nach Anspruch 1 oder 2, bei dem die erste und zweite Spur (S1, S2) ausgehend von der Position (P) in unterschiedliche Richtungen gelegt werden.

4. Verfahren nach einem der voranstehenden Ansprüche, bei dem als mindestens ein erstes Gebiet ein Land (1, 2, 3) berücksichtigt wird.

5. Verfahren nach Anspruch 4, bei dem als mindestens ein zweites Gebiet ein Gewässer berücksichtigt wird.

6. System zum Absetzen eines Notrufs von einem Fahrzeug (10), wobei das System, eine Recheneinheit (12) und ein Kommunikationsmodul (14) aufweist, wobei die Recheneinheit (12) dazu ausgebildet ist, zu bestimmen, in welchem Gebiet sich das Fahrzeug (10) befindet, wobei die Recheneinheit (12) zum Ermitteln des Gebiets dazu ausgebildet ist, ausgehend von einer aktuellen Position (P) des Fahrzeugs (10) in dem zu bestimmenden Gebiet eine erste Spur (S1) und eine zweite Spur (S2) zu legen, die sich voneinander unterscheiden und unter Verwendung von bereitgestellten Geodaten von jeweils zwei unmittelbar benachbarten Gebieten zugeordneten Grenzen (G12, G13, G23), die zwischen diesen Gebieten liegen, zu überprüfen, welche Grenze (G12, G13, G23) von der ersten Spur (S1) ausgehend von der aktuellen Position (P) des Fahrzeugs (10) als erste und welche Grenze (G12, G13, G23) von der zweiten Spur (S2) ausgehend von der aktuellen Position (P) des Fahrzeugs (10) als erste geschnitten wird, wobei für den Fall, dass beide Spuren (S1, S2) die gleiche Grenze (G12, G13, G23) schneiden, die Recheneinheit (12) dazu ausgebildet ist, ausgehend von der aktuellen Position (P) eine neue erste Spur (S1) und eine neue zweite Spur (S2) zu legen, wobei für den Fall, dass sich die von den beiden Spuren (S1, S2) ausgehend von der Position (P) des Fahrzeugs (10) jeweils als erstes geschnittene Grenzen (G12, G13, G23) voneinander unterscheiden, jenes Gebiet als das Gebiet, in dem sich das Fahrzeug (10) aktuell befindet, bestimmt wird, dem beide Grenzen (G12, G13, G23) zugeordnet sind, wobei das Kommunikationsmodul (14) dazu ausgebildet ist, den Notruf abhängig von dem bestimmten Gebiet abzusetzen, wobei als Gebiet ein Land, ein Staat, ein Bundesland, ein völkerrechtlich anerkanntes Territorium und/oder ein Gewässer vorgesehen und/oder berücksichtigt wird.

7. System nach Anspruch 6, bei dem die Recheneinheit (12) dazu ausgebildet ist, die Grenzen (G12, G13, G23) auf ein Koordinatensystem zu projizieren.

8. System nach Anspruch 6 oder 7, das ein Geodatenmodul (16) aufweist, das dazu ausgebildet ist, die Geodaten der Recheneinheit (12) bereitzustellen.

## Claims

1. A method of placing an emergency call from a vehicle (10), in which it is determined in which area the vehicle (10) is currently located, wherein, starting from a current position (P) of the vehicle (10) in the area to be determined, a first track (S1) and a second track (S2) are laid which differ from one another, wherein, using provided geodata of boundaries (G12, G13, G23) respectively assigned to two directly adjacent areas, which boundaries (G12, G13, G23) lie between these areas, it is checked which boundary (G12, G13, G23) is the first to be intersected by the first track (S1) starting from the current position (P) and which boundary (G12, G13, G23) is the first to be intersected by the second track (S2) starting from the current position (P) of the vehicle (10), wherein, in the event that both tracks (S1, S2) intersect the same boundary (G12, G13, G23), a new first track (S1) and a new second track (52) are laid starting from a current position (P) of the vehicle (10), wherein, in the event that the boundaries (G12, G13, G23) respectively first intersected by the two tracks (S1, S2) starting from the current position (P) differ from one another, that area to which both boundaries (G12, G13, G23) are assigned is determined as the area in which the vehicle (10) is currently located, wherein the emergency call is placed depending on the determined area, wherein a country, a state, a federal state, a territory recognized under international law and/or a body of water is provided for and/or taken into account as the area.

2. The method according to claim 1, in which, in the event that two tracks (S1, S2) laid for the first time respectively intersect the same boundary (G12, G13, G23) between the same directly adjacent areas, these tracks (S1, S2) laid for the first time are discarded, wherein, starting from the position (P), a new first track (S1) and a new second track (S2) are laid repeatedly until the boundaries (G12, G13, G23) respectively intersected by the two tracks (S1, S2) differ.

3. The method according to claim 1 or 2, in which the first and second tracks (S1, S2) are laid in different directions starting from the position (P).

4. The method according to any of the preceding claims, in which a country (1, 2, 3) is considered as at least one first area.

5. The method according to claim 4, in which a body of water is considered as at least one second area.

6. A system of placing an emergency call from a vehicle (10), wherein the system has a computing unit (12) and a communication module (14), wherein the computing unit (12) is configured to determine in which area the vehicle (10) is located, wherein the computing unit (12) for determining the area is configured to lay a first track (S1) and a second track (S2), which differ from one another, starting from a current position (P) of the vehicle (10) in the area to be determined and, using provided geodata of boundaries (G12, G13, G23) respectively assigned to two directly adjacent areas, which boundaries (G12, G13, G23) lie between these areas, to check which boundary (G12, G13, G23) is the first to be intersected by the first track (S1) starting from the current position (P) of the vehicle (10) and which boundary (G12, G13, G23) is the first to be intersected by the second track (S2) starting from the current position (P) of the vehicle (10) wherein, in the event that both tracks (S1, S2) intersect the same boundary (G12, G13, G23), the computing unit (12) is configured to lay a new first track (S1) and a new second track (S2) starting from the current position (P), wherein, in the event that the boundaries (G12, G13, G23) respectively first intersected by the two tracks (S1, S2) starting from the current position (P) of the vehicle (10) differ from one another, that area to which both boundaries (G12, G13, G23) are assigned is determined as the area in which the vehicle (10) is currently located, wherein the communication module (14) is configured to place the emergency call depending on the determined area, wherein a country, a state, a federal state, a territory recognized under international law and/or a body of water is provided for and/or taken into account as the area.

7. The system according to claim 6, in which the computing unit (12) is configured to project the boundaries (G12, G13, G23) onto a coordinate system.

8. The system according to claim 6 or 7, having a geodata module (16) which is configured to provide the geodata to the computing unit (12).

## Revendications

1. Procédé de lancement d'un appel d'urgence à partir d'un véhicule (10), destiné à déterminer la zone où se trouve actuellement le véhicule (10), une première voie (S1) et une deuxième voie (S2) différentes l'une de l'autre étant tracées partant d'une position (P) actuelle du véhicule (10) dans la zone à déterminer, procédé dans lequel il est vérifié, à l'aide de géodonnées fournies de limites (G12, G13, G23) associées respectivement à deux zones immédiatement adjacentes, qui se trouvent entre ces deux zones, quelle limite (G12, G13, G23) est franchie en premier par la première voie (S1) partant de la position (P) actuelle du véhicule (10) et quelle limite (G12, G13, G23) est franchie en premier par la deuxième voie (S2) partant de la position (P) actuelle du véhicule (10), dans le cas où les deux voies (S1, S2) franchissent la même limite (G12, G13, G23), une nouvelle première voie (S1) et une nouvelle deuxième voie (S2) étant tracées partant d'une position (P) actuelle du véhicule (10), dans le cas où les limites (G12, G13, G23) qui sont franchies en premier par les deux voies (S1, S2) partant de la position (P) actuelle sont différentes l'une de l'autre, la zone déterminée comme la zone où se trouve actuellement le véhicule (10) étant celle à laquelle sont associées les deux limites (G12, G13, G23), l'appel d'urgence étant lancé en fonction de la zone déterminée, un pays, un État, une province, un territoire reconnu en droit international et/ou un plan d'eau étant prévus et/ou pris en compte en tant que zone.

2. Procédé selon la revendication 1, dans lequel, dans le cas où deux voies (S1, S2) tracées en premier franchissent chacune la même limite (G12, G13, G23) entre les mêmes zones immédiatement adjacentes, ces voies (S1, S2) tracées en premier sont rejetées, une nouvelle première voie (S1) et une nouvelle deuxième voie (S2) étant tracées partant de la position (P) autant de fois que nécessaire jusqu'à ce que les limites (G12, G13, G23) respectivement franchies par les deux voies (S1, S2) soient différentes.

3. Procédé selon la revendication 1 ou 2, dans lequel les première et deuxième voies (S1, S2) partant de la position (P) sont tracées dans des directions différentes.

4. Procédé selon l'une des revendications précédentes, dans lequel un pays (1, 2, 3) est considéré comme au moins une première zone.

5. Procédé selon la revendication 4, dans lequel un plan d'eau est considéré comme au moins une deuxième zone.

6. Système de lancement d'un appel d'urgence à partir d'un véhicule (10), le système présentant une unité de calcul (12) et un module de communication (14), l'unité de calcul (12) étant conçue pour déterminer dans quelle zone se trouve le véhicule (10), l'unité de calcul (12) destinée à déterminer la zone étant conçue pour tracer, partant d'une position (P) actuelle du véhicule (10) dans la zone à déterminer, une première voie (S1) et une deuxième voie (S2) différentes l'une de l'autre et pour vérifier, à l'aide de géodonnées fournies de limites (G12, G13, G23) associées respectivement à deux zones immédiatement adjacentes, qui se trouvent entre ces deux zones, quelle limite (G12, G13, G23) est franchie en premier par la première voie (S1) partant de la position (P) actuelle du véhicule (10) et quelle limite (G12, G13, G23) est franchie en premier par la deuxième voie (S2) partant de la position (P) actuelle du véhicule (10), dans le cas où les deux voies (S1, 52) franchissent la même limite (G12, G13, G23), l'unité de calcul (12) étant conçue pour tracer une nouvelle première voie (S1) et une nouvelle deuxième voie (S2) partant de la position (P) actuelle, dans le cas où les limites (G12, G13, G23) qui sont franchies en premier par les deux voies (S1, S2) partant de la position (P) du véhicule (10) sont différentes l'une de l'autre, la zone déterminée comme la zone où se trouve actuellement le véhicule (10) étant celle à laquelle sont associées les deux limites (G12, G13, G23), le module de communication (14) étant conçu pour lancer l'appel d'urgence en fonction de la zone déterminée, un pays, un État, une province, un territoire reconnu en droit international et/ou un plan d'eau étant prévus et/ou pris en compte comme zone.

7. Système selon la revendication 6, dans lequel l'unité de calcul (12) est conçue pour projeter les limites (G12, G13, G23) sur un système de coordonnées.

8. Système selon la revendication 6 ou 7, présentant un module de géodonnées (16) conçu pour fournir les géodonnées à l'unité de calcul (12).
